# DEMANDE DE BREVET EUROPEEN

(11) **EP 1 858 181 A1**
(43) Date de publication de la demande: **21.11.2007**
(21) Numéro de dépôt: 06290802.5
(22) Date de dépôt: 15.05.2006
(51) Int. Cl.: H04H 1/00

(54) **Procédé de traitement de mises à jour d'informations à destination de récepteurs mobiles**

(71) Demandeur: Nagravision S.A., 1033 Cheseaux-sur-Lausanne (CH)
(72) Inventeur: Zhao, Yishan, 92160 Antony (FR)
(74) Mandataire: Wenger, Joel-Théophile

(57) **Abrégé**

Le procédé de traitement de mises à jour du guide électronique de programmes ESG dans un récepteur DVB-H consiste à signaler l'état dudit guide (ESG) courant au moyen de messages pouvant être reçus quel que soit le service sélectionné par le récepteur. Le message de signalisation comprend des informations décrivant les éléments basiques modifiés du guide ESG par rapport à la version de référence de du guide, des informations décrivant l'état des flux transportant le guide ESG, des informations décrivant l'état d'un service, des informations concernant la version globale du guide ESG. Le récepteur extrait le message de signalisation du flux et le compare avec les données du guide ESG stocké. En cas de différence entre ces données, le récepteur détermine le type des données ayant changé et active la réception ou le téléchargement du guide ESG afin d'effectuer une mise à jour des données stockées.

## Description

### Domaine de l'invention

La présente invention concerne le domaine de la diffusion par voie hertzienne d'un flux de données numériques selon une norme du type DVB-H (Digital Video Broadcast, Handheld) ou similaire. Le flux est reçu par des équipements mobiles, tels que, par exemple, un téléphone portable, un assistant personnel PDA (Personal Digital Assistant), un récepteur portable de télévision numérique, un ordinateur portable.

Les données numériques comprennent un certain nombre de services tel que par exemple de la télévision à péage, des contenus audio, des jeux, des logiciels ou des informations telles que des prévisions météorologiques, des informations boursières ou autres.

Plus particulièrement, l'invention se concentre sur un procédé de traitement de mises à jour d'informations à destination d'une pluralité d'équipements ou récepteurs mobiles.

### Arrière plan technique

Dans le cadre de la diffusion de services selon la norme DVB-H (Digital Video Broadcast - Handheld), les données numériques de contenus sont transmises de façon cyclique sous forme de salves aussi appelées "burst" ou "time slices". Chaque salve correspond souvent à un service pouvant être défini comme un ou plusieurs flux numériques formant un sous-ensemble du flux numérique global. Ce sous-ensemble partage un identifiant commun permettant à un récepteur de reconstituer le contenu correspondant au service sélectionné.

Un problème connu des équipements mobiles DVB-H est la capacité limitée des batteries. En effet, les mécanismes de démodulation et de décodage du flux à large bande et à haut débit de données (jusqu'à 10 Mbit/s par canal) entraînent une grande consommation d'énergie des circuits électroniques concernés. La solution adoptée pour diminuer la consommation est la transmission du flux par salves. L'équipement mobile de réception n'est alors enclenché que périodiquement pour recevoir les salves et en mode veille (standby) pendant les interruptions. Ce mode particulier au DVB-H permet ainsi de réduire la consommation de l'équipement mobile d'un facteur dix ou plus.

Un guide électronique de services désigné par ESG (Electronic Service Guide) contient des informations concernant les services disponibles décrivant les contenus au niveau éditorial, leur programmation et leur conditions d'accès (prix, abonnements, offres commerciales, etc). Il est en général diffusé conjointement avec les services du réseau. Le guide ESG peut être également téléchargé à partir d'un serveur distant.

Dans la pratique, les informations de configuration des services sont relativement stables, par contre celles sur les contenus ainsi que leur programmation de diffusion (date, heure) sont variables et peuvent être modifiées en tout temps selon les circonstances.

Les données du guide ESG sont diffusées de manière cyclique dans un flux, comme un service quelconque. En général, elles sont intégralement renouvelées de manière périodique. Entre deux renouvellements programmés, des mises à jour ou générations intégrales de ces données peuvent être effectuées suite à des changements de dernière minute. La fréquence ainsi que la quantité de données devant être renouvelées sont difficilement prévisibles.

La réception et le traitement des données du guide ESG par le récepteur étant et devant être transparents pour l'utilisateur sont effectués en arrière plan lorsque l'utilisateur consomme un service ou un programme de son choix.

Actuellement, les récepteurs reçoivent systématiquement ou arbitrairement les salves du flux des données du guide ESG et extraient les données nouvelles ou modifiées par rapport à celles stockées dans le récepteur. Autrement dit, le tuner DVB-H du récepteur doit être activé pour recevoir non seulement les salves du service sélectionné mais aussi les salves contenant les données du guide ESG afin de pouvoir disposer d'informations à jour sur les services. Compte tenu de la fréquence imprévisible des mises à jour et du volume important des données, la réception systématique de ces salves s'avère totalement inutile et la réception arbitraire inefficace. La synchronisation des données ESG avec la diffusion effective des services est devenue un problème majeur soit à cause de la consommation excessive d'énergie qu'elle implique, soit à cause de l'incertitude sur la concordance des données stockées dans le récepteur avec les services disponibles.

Le document WO2005045603 décrit un terminal de réception de services diffusés. Ce terminal comprend un contrôleur configuré pour exploiter les données formant un guide électronique de services ESG et stocker des informations d'accès aux services. Ces informations sont utilisées pour créer une liste de services disponibles à l'utilisateur. Une interface utilisateur présente au moins une partie de la liste contenant des services individuels sélectionnables ou des groupes dont chaque service est sélectionnable. Le guide de programme ESG est généré et mis à jour périodiquement et peut inclure des indications sur la dernière modification (date, heure, période de validité, prochaine mise à jour etc.). Le terminal reçoit les données mises à jour inattendues via un service d'alertes pour actualiser le guide ESG. L'interface utilisateur permet une maintenance permanente du guide ESG ou alternativement d'empêcher la réception d'une mise à jour du guide ESG lorsque celle-ci est sans importance à un moment donné afin de préserver l'énergie de la batterie. Cette solution n'est applicable que si toutes les conditions suivantes sont satisfaites, à savoir :
1. Un service de type Alerte est disponible sur le réseau de diffusion,
2. Le récepteur doit recevoir en permanence ce service,
3. Les données mises à jour doivent être très limitées en volume et n'ont aucun lien avec les mises à jour futures. Autrement dit, l'arrêt de la diffusion de ces données modifiées ne doit pas avoir d'impact sur des données futures à cause de la non-réception de ces données par certains récepteurs du réseau.

### Description sommaire

Le but de la présente invention est d'assurer une optimisation de la réception de données de mise à jour et du traitement des informations modifiées au niveau du récepteur afin de minimiser son temps d'activation et par conséquent économiser l'énergie de la batterie.

Ce but est atteint par un procédé de traitement de mises à jour d'informations par un récepteur mobile connecté à un réseau mobile diffusant de manière cyclique un ensemble de services principaux et/ou secondaires sous forme de salves dans un flux de données numériques, ledit réseau mettant à disposition un guide électronique de programmes sous forme de salves d'un service diffusé ou dans un serveur pour le téléchargement vers le récepteur, ledit procédé est caractérisé en ce qu'il comprend les étapes suivantes:
- réception d'au moins un service principal et/ou secondaire dudit flux de données numériques,
- réception et extraction, à partir des données dudit service d'au moins un message de signalisation comprenant des données décrivant l'état du guide électronique de programmes courant.
- comparaison de l'état du guide courant avec celui du guide préalablement stocké dans le récepteur,
- en cas de différences entre l'état reçu et l'état stocké, activer le récepteur pour la réception et/ou le téléchargement du guide.
- mettre à jour, avec les données reçues, les données du guide stockées et l'état du guide courant,
- désactiver la réception et/ou le téléchargement lorsque la mise à jour est terminée.

La présente invention concerne également un procédé de diffusion de mises à jour d'informations à destination d'une pluralité de récepteurs mobiles connectés à un réseau mobile, caractérisé en ce qu'il comprend les étapes suivantes:
- diffusion de manière cyclique d'au moins un service dans un flux de données numériques,
- diffusion ou mise à disposition pour le téléchargement de données à jour d'un guide électronique de programmes,
- insertion dans ledit flux de données numériques, d'au moins un message de signalisation comprenant des données décrivant l'état du guide électronique de programmes, lesdites données étant aptes à activer un récepteur de manière à recevoir et mettre à jour les données du guide stockées dans ledit récepteur.
   La solution consiste à signaler l'état des données d'information sur les services, correspondant au guide électronique de programmes ESG, en cours de diffusion au moyen de messages pouvant être reçus quel que soit le service sélectionné par le récepteur. Le message contenu dans chacun desdits services est identique à un instant donné.
   Le message de signalisation peut être inséré de deux manières selon la configuration du réseau, à savoir:
   a) Dans un service de type "alerte" que le récepteur reçoit en permanence ou dans un service dédié et regroupé dans la même salve que le service "alerte".
   b) Dans un service quelconque susceptible d'être reçu (télévision, jeux, nouvelles, etc.), lorsque le réseau est configuré sans service permanent.
   Le récepteur extrait le message de signalisation du flux et compare l'état du guide ESG stocké et celui du guide ESG courant indiqué dans le message. En cas de différence entre ces données, le récepteur détermine le type des données ayant changé et active la réception des données du guide ESG afin d'effectuer une mise à jour des données du guide ESG stockées. Sinon, le récepteur ne sera pas activé pour la réception du flux transportant les données du guide ESG.
   La diffusion de messages permettant d'activer la réception du flux de données ESG que lorsque le récepteur détecte un changement entraîne une diminution de la consommation d'énergie du récepteur. En effet, cette dernière est proportionnelle au nombre de services reçus et par conséquent au nombre de salves et de leur fréquence dans le temps.
   Les procédés de traitement et de diffusion de mises à jour peuvent être également appliqués au téléchargement du guide ESG, non pas pour économiser l'énergie mais pour éviter d'établir des connexions inutiles au serveur. Ils sont donc avantageux d'une part pour le récepteur dont les coûts de communication sont réduits et d'autre part pour le serveur qui ne sera pas surchargé inutilement. Dans ce cas, le message de signalisation active le téléchargement de données de mises à jour du guide ESG ou du guide complet pour actualiser le guide ESG stocké dans le récepteur.

### Brève description des figures

L'invention sera mieux comprise grâce à la description détaillée qui va suivre et qui se réfère aux figures annexées données à titre d'exemples nullement limitatif.
- La figure 1 illustre un schéma d'un flux DVB-H où les services, y compris le guide ESG, sont transmis sous forme de salves. Les messages de signalisation sont insérés dans les services susceptibles d'être reçus par le récepteur.
- La figure 2 illustre un schéma d'un flux DVB-H où des services principaux, y compris le guide ESG, sont transmis sous forme de salves. Les messages de signalisation sont transmis dans une salve regroupant des services secondaires du type alerte, zapping dynamique, etc. associés aux services principaux.

### Description détaillée

Le message de signalisation (M) est diffusé dans un flux de sorte que le récepteur activé le reçoit systématiquement, comme par exemple un flux de messages d'administration des droits ou service EMM dans le cadre de la télévision à péage.

Il peut être également diffusé dans une portion d'un flux élémentaire correspondant aux salves d'un service auquel le récepteur est synchronisé. Dans ce flux, le message de signalisation peut être inséré dans un paquet UDP (User Datagram Protocol) d'un groupe de récepteurs identifiés par une adresse de groupe spécifique (multicast) existant ou d'un groupe déterminé par l'opérateur diffuseur. Ainsi, une mise à jour du guide ESG peut être ciblée à un ou plusieurs ensembles de récepteurs prédéterminés selon leur position géographique par exemple.

Les messages de signalisation se distinguent selon leur contenu en informations définissant un niveau de mise à jour des informations sur les services (guide ESG), à savoir:
- des informations décrivant les éléments basiques modifiés du guide ESG par rapport à la version de référence de du guide, ce qui permet aux récepteurs d'effectuer la mise à jour seulement de ces éléments (parfois, on utilise les termes 'feuille' ou 'fragment'), qui peuvent être relatifs soit à une entité de transport soit à une entité fonctionnelle.
- des informations décrivant l'état des flux transportant le guide ESG, lorsque celui-ci est divisé en plusieurs flux, ce qui permet aux récepteurs d'effectuer la mise à jour seulement du flux ou des flux modifiés (une branche de la structure physique relative au transport).
- des informations décrivant l'état d'un service (tel qu'un identificateur de version ou d'une partie de celui-ci). Le cas échéant, le récepteur effectuera la mise à jour seulement sur les informations relatives à ce service (une branche de la structure logique relative à la sémantique fonctionnelle).
- des informations concernant la version globale du guide ESG permettant au récepteur de mettre à jour tout le guide ESG stocké.

Un message de signalisation contient soit l'un des types d'informations tel que décrit ci-dessus, soit plus généralement, une combinaison de ces types d'informations afin de permettre une mise à jour du plus grand nombre possible de configurations de récepteurs.

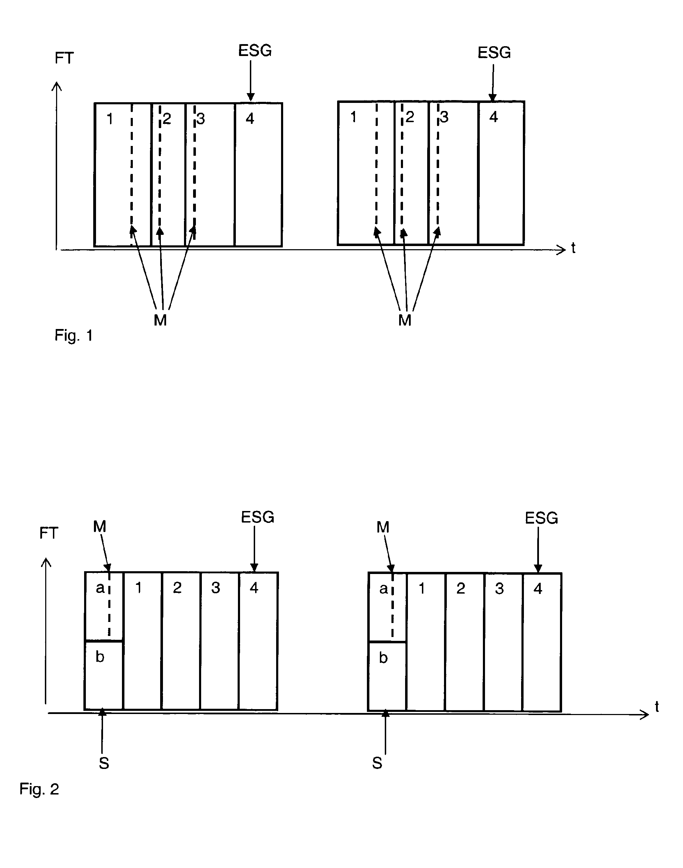

Le principe de diffusion du guide ESG et le mécanisme de mise à jour proprement dit restent inchangés par rapport à ceux spécifiés dans la norme DVB-H. Les services (1, 2, 3, 4) peuvent être diffusées dans un flux de transport (FT) selon deux modes:
a) En mode continu, les services sont groupés dans un même ensemble de salves (1, 2, 3, 4) diffusé selon une période donnée comme illustré par la figure 1. Le guide ESG constitue un service particulier (salves 4 dans la figure 1) auquel le récepteur se synchronise en même temps qu'à un service principal (salves 1 ou 2 ou 3) lorsqu'une mise à jour du guide ESG devient nécessaire. Selon une configuration particulière, le service ESG est adjacent, sur l'axe du temps (t), au service principal en cours de réception comme dans le cas du service 3. De ce cas, la durée de réception est rallongée par la durée de la salve ESG à chaque cycle du service 3 principal. Le procédé selon l'invention permet d'une part d'éviter une synchronisation permanente aux salves du service ESG et d'autre part d'optimiser le temps d'activation du récepteur. En effet, la réception des données du guide ESG ne sera effective que si les résultats de l'analyse du message (M) de signalisation impliquent la mise à jour des données stockées dans le récepteur.
b) En mode parallèle, des services sont groupés dans une même salve et diffusés en même temps. Dans l'exemple de la figure 2 les services principaux 1, 2 et 3 ainsi que le service 4 représentant l'ESG sont diffusés comme dans l'exemple de la figure 1. Des services secondaires (a, b) regroupés dans une salve (S) sont diffusés en mode parallèle et associés avec un service principal (1, 2, 3). Le message de signalisation (M) est inséré une seule fois dans la salve (S) dans un des services secondaires a ou b.

L'avantage du mode parallèle est de permettre une organisation des salves comprenant plusieurs services dont la quantité d'informations de chacun reste faible. Le chevauchement (marge de sécurité de réception) est ainsi limité. A la réception, ces salves (S) de services secondaires (a, b) sont systématiquement reçues en même temps que celles des services principaux (1, 2, 3).

Par rapport au mode de la figure 1, les différences sont les suivantes :
a) Le message de signalisation (M) est diffusé une seule fois au lieu d'être inséré dans tous les services principaux (1, 2, 3).
b) La réception de la salve (S) contenant les services secondaires (a, b) est systématique et obligatoire (même sans le message de signalisation (M)).

Grâce aux messages (M) de signalisation, le récepteur ne traitera les flux ou les fragments du guide ESG diffusés en parallèle que si un renouvellement complet ou partiel des données ESG stockées est nécessaire. Ce mode combiné au procédé de l'invention se montre particulièrement avantageux car la consommation d'énergie du récepteur est minimale d'une part grâce au mode de diffusion en parallèle des services et d'autre part grâce à un traitement optimal des salves.

La période ou la fréquence de diffusion du message (M) de signalisation peut être configurable en fonction de l'exigence sur la précision des informations du guide ESG et de la fréquence de mise à jour des données.

Selon une configuration, un message de signalisation (M) est diffusé en permanence au même rythme que les salves (S) des services secondaires (a, b) de la figure 2 ou des services principaux (1, 2, 3) de la figure 1. Une mise à jour des données ESG est donc possible à tout moment après l'enclenchement du récepteur et ceci quel que soit le service principal (zapping) sélectionné.

Selon une autre configuration, les messages (M) sont diffusés soit pendant une période prédéterminée, soit périodiquement dans des salves ou dans un groupe de salves prédéterminées, ou encore à un rythme périodique plus modéré que celui des salves du ou des services. Dans ce cas, le récepteur ne pourra pas être mis à jour immédiatement après un enclenchement ou un changement de service, mais il devra attendre la réception de salves contenant un message de signalisation (M) susceptible d'activer soit la réception d'un flux ou d'un service ESG, soit le téléchargement à partir d'un serveur.

Cependant, chaque salve d'un service diffusé contient au maximum un message (M) de signalisation.

Ce message (M) change lors d'un renouvellement entier des données ESG ou lors d'un renouvellement partiel ou mise à jour afin de refléter le plus fidèlement possible les données du guide ESG diffusées. Il est à noter que le message de signalisation (M) contient l'état le plus récent des données modifiées par rapport à la version de référence de du guide ESG. Un message de signalisation (M) est mis en diffusion en même temps que les données de l'ESG correspondant.

Afin de limiter la taille du message et de faciliter la décision de mise à jour du guide ESG au niveau du récepteur, le message de signalisation (M) comporte des données définissant un degré de détails ou granularité qui dépendra essentiellement du nombre d'éléments modifiés, de leur version et de leur niveau dans la hiérarchie. La mise à jour s'effectue, en fonction des données stockées dans le récepteur et de celles en cours de diffusion, à un ou plusieurs niveaux tels qu'à celui d'un fragment de données ESG, d'une structure groupant les données ESG dans le flux (conteneur), d'une session FLUTE (File Delivery over Unidirectional Transport) ou de tout le guide ESG.

Dans un guide ESG, les données sont organisées selon une structure hiérarchisée définie par la norme DVB dans le cadre de DVB-H. Il est à rappeler que l' ESG supporte les différents niveaux suivants :
- Fragment : objet le plus élémentaire de l'ESG
- Conteneur : un ensemble de fragments considéré comme un fichier au sein d'une session FLUTE,
- Session FLUTE: une partition de l'ESG diffusée sur un port multicast dédié.
- ESG Bootstrap : la session FLUTE racine de l'ESG, le point d'entrée pour la découverte de la configuration et des données de l'ESG.

Cette hiérarchisation avec une signalisation de mise à jour appropriée permet de minimiser la taille des données et une mise à jour du guide ESG par parties, depuis le niveau 'fragment' jusqu'à celui de la Session FLUTE. Le traitement des fragments ESG est effectué par l'apport d'informations de gestion des fragments permettant d'identifier les fragments déjà reçus par le récepteur, les fragments mis à jour et les nouveaux fragments. Le message de signalisation (M) contiendra alors des identificateurs des conteneurs et/ou des fragments ayant changés selon la granularité ou niveau de détail souhaité de la mise à jour du guide ESG.

Ce procédé permet donc aux récepteurs de disposer toujours de données ESG à jour tout en évitant la réception, l'analyse et le traitement systématique du flux du service ESG. L'énergie nécessaire à la réception permanente du flux ESG est ainsi économisée dans sa quasi-totalité.

Le procédé peut également être appliqué à tout types de données d'applications en dehors de la télévision telles que des catalogues, des nouvelles, des annonces, des logiciels, etc. et ceci quel que soit leur mode de diffusion (parallèle ou continu).

## Revendications

1. Procédé de traitement de mises à jour d'informations par un récepteur mobile connecté à un réseau mobile diffusant de manière cyclique un ensemble de services (1, 2, 3, a, b) principaux et/ou secondaires sous forme de salves dans un flux de données numériques (FT), ledit réseau mettant à disposition un guide (ESG) électronique de programmes sous forme de salves d'un service diffusé (4) ou dans un serveur pour le téléchargement vers le récepteur, ledit procédé est **caractérisé en ce qu'**il comprend les étapes suivantes:
- réception d'au moins un service principal et/ou secondaire (1, 2, 3, a, b) dudit flux de données numériques (FT),
- réception et extraction, à partir des données dudit service (1, 2, 3, a, b) d'au moins un message (M) de signalisation comprenant des données décrivant l'état du guide (ESG) électronique de programmes courant.
- comparaison de l'état du guide (ESG) courant avec celui du guide (ESG) préalablement stocké dans le récepteur,
- en cas de différences entre l'état reçu et l'état stocké, activer le récepteur pour la réception et/ou le téléchargement du guide (ESG).
- mettre à jour, avec les données reçues, les données du guide (ESG) stockées et l'état du guide (ESG) courant,
- désactiver la réception et/ou le téléchargement lorsque la mise à jour est terminée.

2. Procédé selon la revendication 1, **caractérisé en ce que** le message (M) comporte des données permettant au récepteur de déterminer la nécessité de la mise à jour du guide (ESG) selon le nombre d'éléments modifiés et l'état des données du guide ESG stockées dans le récepteur et de celles du guide ESG courant.

3. Procédé selon les revendications 1 et 2, **caractérisé en ce que** le récepteur effectue la mise à jour en fonction du type de modification des données soit au niveau d'un fragment, d'un conteneur, d'une session FLUTE ou de tout le guide (ESG).

4. Procédé de diffusion de mises à jour d'informations à destination d'une pluralité de récepteurs mobiles connectés à un réseau mobile, **caractérisé en ce qu'**il comprend les étapes suivantes:
- diffusion de manière cyclique d'au moins un service (1, 2, 3, a, b) dans un flux de données numériques,
- diffusion ou mise à disposition pour le téléchargement de données à jour d'un guide (ESG) électronique de programmes,
- insertion dans ledit flux de données numériques, d'au moins un message de signalisation (M) comprenant des données décrivant l'état du guide (ESG) électronique de programmes, lesdites données étant aptes à activer un récepteur de manière à recevoir et mettre à jour les données du guide (ESG) stockées dans ledit récepteur.

5. Procédé selon la revendication 4, **caractérisé en ce que** le message de signalisation (M) est diffusé dans une portion du flux reçue par un récepteur quel que soit le service (1, 2, 3, a, b) auquel ledit récepteur est synchronisé.

6. Procédé selon la revendication 4, **caractérisé en ce que** le message de signalisation (M) est inséré de manière régulière dans une salve d'un service principal (1, 2, 3) diffusé en mode continu ou dans une salve (S) de services secondaires (a, b) diffusés en mode parallèle et associés à un service principal (1, 2, 3).

7. Procédé selon la revendication 4, **caractérisé en ce que** le message de signalisation (M) est diffusé soit pendant une période prédéterminée dans une salve d'un service (1, 2, 3, a, b), soit de manière périodique dans des salves ou dans un groupe de salves prédéterminées, la période étant définie en fonction de l'exigence sur la précision des informations du guide (ESG) et de la fréquence de mise à jour des données.

8. Procédé selon les revendications 4 à 7, **caractérisé en ce qu'**un identificateur de la version des données du guide ESG courant est inséré dans le message de signalisation (M).

9. Procédé selon les revendications 4 à 8, **caractérisé en ce qu'**un identificateur de la version globale du guide (ESG) courant est inséré dans le message de signalisation (M).

10. Procédé selon les revendications 4 à 9, **caractérisé en ce que** des informations décrivant les éléments basiques modifiés du guide (ESG) par rapport à la version de référence dudit guide (ESG) sont insérées dans le message de signalisation (M).

11. Procédé selon les revendications 4 à 10, **caractérisé en ce qu'**une liste des identificateurs de versions de chaque service (1, 2, 3, a, b) susceptible d'être reçu par un récepteur est insérée dans le message de signalisation (M).

12. Procédé selon les revendications 1 à 11, **caractérisé en ce qu'**il est mis en oeuvre dans un réseau mobile du type DVB-H lors du renouvellement complet ou partiel du guide (ESG) électronique de programmes stocké dans les récepteurs mobiles connectés au réseau.
